Europäisches Patentamt

European Patent Office

Office européen des brevets

(11) Veröffentlichungsnummer: **0 653 459 A1**

# (12) EUROPÄISCHE PATENTANMELDUNG

(21) Anmeldenummer: **94116948.4**

(51) Int. Cl.⁶: **C08K 5/10**

(22) Anmeldetag: **26.10.94**

(30) Priorität: **11.11.93 DE 4338541**

(43) Veröffentlichungstag der Anmeldung:
**17.05.95 Patentblatt 95/20**

(84) Benannte Vertragsstaaten:
**AT BE CH DE DK ES FR GB IE IT LI LU NL PT SE**

(71) Anmelder: **HOECHST AKTIENGESELLSCHAFT
Brüningstrasse 50
D-65929 Frankfurt am Main (DE)**

(72) Erfinder: **Schleicher, Andreas, Dr.
Körnerstrasse 6
D-64683 Einhausen (DE)**
Erfinder: **Kohlhepp, Klaus
Am Dattenbach 27
D-65817 Eppstein (DE)**
Erfinder: **Piesold, Jan-Peter, Dr.
Oblatterwallstrasse 44
D-86153 Augsburg (DE)**

(54) **Formmasse aus Polyarylensulfiden.**

(57) Eine Formmasse aus
  (A) 20 bis 80 Gew.-% mindestens eines Polyarylensulfids,
  (B) 1 bis 60 Gew.-% mindestens eines mineralischen Füllstoffes,
  (C) 1 bis 65 Gew.-% mindestens eines oberflächenmodifizierten mineralischen Füllstoffes und
  (D) 0,01 bis 0,4 Gew.-% mindestens eines gesättigten langkettigen Carbonsäureesters
kann durch Spritzguß oder Extrusion zu Formkörper verarbeitet werden, die eine hochwertige Oberflächenqualität aufweisen und ein isotropes Eigenschaftsverhalten zeigen. Eine Metallisierung der Formkörper erweist sich als dauerhaft, was eine Verwendung für Leuchten, insbesondere Reflektoren und elektronische Funktionsteile favorisiert.

EP 0 653 459 A1

Die Erfindung betrifft Formmassen aus Polyarylensulfiden, vorzugsweise Polyphenylensulfid (PPS) zur Herstellung von Reflektoren und Funktionsteilen mit hoher Planarizität. Daraus hergestellte reflektierende Gegenstände wie Leuchten, vorzugsweise Scheinwerfer und Reflektoren, sowie elektronische Funktionsteile, müssen für eine Metallisierung hohen Planarizitätsanforderungen genügen.

Aus der DE-A 39 07 473 ist bekannt, aus Polyarylensulfidformmassen Formkörper mit optisch hochwertigen Oberflächen herzustellen. Derartige Formkörper haben aber geringe Biegefestigkeiten, die für eine Vielzahl von Anwendungen nicht ausreichen. Eine Verbesserung der Biegefestigkeit wird durch die Zugabe von anorganischen Fasern erreicht (DE-A 40 17 243). Dies führt aber zu anisotropen Eigenschaften, wie einer anisotropen Reißfestigkeit oder anisotropem Verzug, was speziell bei Anwendungen als Scheinwerferreflektoren bei Kraftfahrzeugen von Nachteil ist.

Es bestand daher die Aufgabe, Polyarylensulfid-Formmassen herzustellen, die die negativen Eigenschaften der bekannten Polyarylensulfid-Zusammensetzungen nicht aufweisen.

Ein weiterer wichtiger Punkt bei der Entwicklung von Formmassen für Reflektoren ist die geeignete Wahl von Gleit- und Entformungshilfsmitteln. Diese müssen die Entformung unterstützen, dürfen sich aber beim Spritzgießen im Laufe der Zeit nicht an der Oberfläche anreichern. Ferner soll das Gleitmittel die Metallhaftung auch bei besonderen klimatischen Bedingungen nicht negativ beeinflussen.

Es wurde nun gefunden, daß sich isotrope, rein mineralisch gefüllte Polyarylensulfidformmassen zu Formkörpern mit optisch hochwertigen Oberflächen verarbeiten lassen, die gleichzeitig gute mechanische Eigenschaften besitzen. Sie sind z.B. direkt metallisierbar und weisen hohe Biegefestigkeiten auf, wenn sie neben üblichen Füllstoffen bestimmte oberflächenmodifizierte, z.B. mit Aminosilan gecoatete, Füllstoffe enthalten sowie zusätzlich Gleitmittel, basierend auf gesättigten langkettigen Carbonsäureestern.

Die Erfindung betrifft daher Formmassen aus:

(A) 20 bis 98 Gew.-% mindestens eines Polyarylensulfids, vorzugsweise Polyphenylensulfid,

(B) 1 bis 60 Gew.%, vorzugsweise 10 bis 45 Gew.-%, insbesondere 10 bis 35 Gew.-%, mindestens eines mineralischen Füllstoffes,

(C) 1 bis 65 Gew.-%, vorzugsweise 5 bis 45 Gew.-%, insbesondere 10 bis 35 Gew.-% mindestens eines oberflächenmodifizierten mineralischen Füllstoffes und

(D) 0,01 bis 0,4 Gew.- %, vorzugsweise 0,01 bis 0,3 Gew.-%, insbesondere 0,01 Gew.-% bis 0,2 Gew.-% mindestens eines gesättigten langkettigen Carbonsäureesters.

Die erfindungsgemäß einsetzbaren Polyarylensulfide (Komponente (A)), sind vorzugsweise lineare Polyphenylensulfide und seit langem bekannt (K. Kohlhepp, Kunststoffe, 79 (1989), 602). Sie weisen Viskositäten von 0,5 bis 500 Pa*s ($310^\circ$ C, Schergeschw. 1000 $s^{-1}$ auf. Das Polyarylensulfid ist im allgemeinen neutral, d. h. in destilliertes Wasser eingebrachtes Material führt zu einem pH-Wert von 6 bis 8,5.

Als Füllstoffe der Komponente (B) dienen schuppen-, blättchen- oder kugelförmige mineralische Füllstoffe, die einen mittleren Teilchendurchmesser von 0,5 bis 200 $\mu$m, vorzugsweise von 0,5 bis 150 $\mu$m und insbesondere von 0,5 bis 100 $\mu$m aufweisen. Es finden übliche bekannte Substanzen Verwendung, wie Kreide und Talkum, einzeln oder in Kombination.

Füllstoffe der Komponente (C) sind oberflächenmodifizierte Mineralien, z. B. mit Amino- und/oder Epoxysilanen gecoatete Silikate. Als oberflächenmodifizierte Mineralien eignen sich gemäß der Erfindung mineralische Füllstoffe, ausgewählt z.B. aus der Gruppe der verschiedenen Glimmer, Kaoline und Quarze, bevorzugt inerte und neutrale Silikate, bei denen sich beim Einbringen in entionisiertes Wasser im allgemeinen ein pH-Wert von 6 bis 8,5 vorzugsweise von 6,5 bis 7,5, einstellt.

Gemäß der Erfindung werden als Komponente (D) langkettige, gesättigte Carbonsäureester eingesetzt. Bevorzugt werden Partial- oder Vollester aus Pentaerythrit oder Trimethylolpropan mit linearen, gesättigten aliphatischen Carbonsäuren mit einer Kettenlänge von mehr als 20 C-Atomen, bevorzugt mit 24 bis 36 C-Atomen, verwendet. Besonders bevorzugt sind Ester von technischen Montansäuren. Montansäuren sind aus dem natürlich vorkommenden Rohmontanwachs durch oxidative Bleichung erhältlich und bestehen überwiegend aus Carbonsäuren der genannten Struktur (Römpp Chemie Lexikon, 8. Aufl., Bd. 4, S. 2667).

Die Substanzen der Komponenten (A) bis (D) können jeweils einzeln oder im Gemisch eingesetzt werden.

Die Formmassen gemäß der Erfindung können mit üblichen Techniken, z.B. Spritzguß oder Extrusion, zu Formkörpern verarbeitet werden und führen beim Spritzgießen auch nach mehreren Spritzgußdurchgängen zu keiner Belagsbildung in dem Spritzgußwerkzeug. Sie eignen sich daher in vorteilhafter Weise als Materialien für Spritzgußkörper, an die hohe Anforderungen an die Oberflächengüte und an die isotrope Dimensionsstabilität gestellt werden und die gleichzeitig verbesserte mechanische Eigenschaften z.B. eine hohe Wärmeformbeständigkeit aufweisen.

Die gemäß der Erfindung hergestellten Formkörper lassen sich problemlos und dauerhaft direkt metallisieren, d.h. sie können nach bekannten Methoden, wie Vakuumbedampfung und Gasplattierung, mit Metallen, wie Kupfer, Nickel, Aluminium u.a., beschichtet werden. Vorzugsweise werden die Metalle nach einer üblichen Plasmavorbehandlung aufgedampft. Beispielsweise lassen sich die Spritzgußkörper nach Direktmetallisierung als reflektierende Gegenstände wie Leuchten bzw. Reflektoren einsetzen oder für elektronische Funktionsteile verwenden.

Beispiele:

Zur Herstellung der Formmassen wurde ein handelsübliches Polyphenylensulfid, z.B. [R]Fortron (Hoechst AG, Frankfurt am Main, Bundesrepublik Deutschland) verwendet, das nach Einbringen in ionenfreies Wasser den pH-Wert des Wassers nahezu neutral, d.h. den pH-Wert auf 6 bis 8,5, stellt.

In einem konventionellen Ein- oder Zweischneckenextruder wird das neutrale Polyphenylensulfid mit den Zusatzstoffen zu den Formmessen gemäß der Erfindung compoundiert.

Daraus werden durch konventionelles Spritzgießen Reflektoren für den Kfz.-Bereich sowie Normprüfkörper für die Messung der mechanischen Eigenschaften nach den DIN-Normen hergestellt.

Die Reflektoren bzw. Normplatten werden unter vermindertem Druck nach bekannten Methoden mit Aluminium bedampft. Die Qualität der Metallisierung wird visuell bewertet:

1 = gut, bis 10 = schlecht.

Die Rezepturen der Beispiele 1 und 2 gemäß der Erfindung mit den gemessenen Biegefestigkeiten und der visuellen Bewertung nach Metallisierung sind in der Tabelle 1 aufgeführt. Als Vergleichsbeispiele wurden die Rezepturen und Ergebnisse aus DE-A 40 17 243 übernommen.

Tabelle 1:

| | Beispiel 1 | Beispiel 2 | Vergl.-beispiel[5] 1 | Vergl.-beispiel[5] 2 | Vergl.-beispiel[5] 3 |
|---|---|---|---|---|---|
| PPS[1] | 44,9 | 54,9 | 39,5 | 47,5 | 47,5 |
| Talk[2] | 15 | 13 | | | |
| Kaolin, Aminosilan-gecoatet[3] | 40 | 32 | | | |
| Pentaerythrittetra-montanat[4] | 0,1 | 0,1 | | | |
| Mineralischer Füllstoff $(CaCO_3/MgCO_3)$[5] | | | 60 | 37 | 37 |
| Glasfasern[5] | | | | 15 | |
| Kaliumtitanat-Whiskers[5] | | | | | 15 |
| Montansäureester (E-Wachs)[5] | | | 0,5 | 0,5 | 0,5 |
| Biegefestigkeit [MPa] (nach DIN 53452) | 137 | 134 | 80 | 130 | 115 |
| Metallisierung: Visuelle Bewertung (1 = gut, 10 = schlecht) | 2 | 1 | 1 | 6 | 2 |

1) Polyphenylensulfid-Pulver,

Viskosität 30 bis 35 Pa*s bei 306°C, Schergeschw. 1000 $s^{-1}$

2) Talk 20 MOOS (Luzemac, Düsseldorf)

3) Translink 445 (Engelhard Corp., Edison, NJ, U.S.A.)

4) ®Hostamont TP ET 141 (Hoechst AG, Frankfurt am Main)

5) nach Angaben in DE-A 40 17 243 bzw. EP-A 0 459 229

Das Vergleichsbeispiel 1 hat bei guter Metallisierung eine schlechte Biegefestigkeit, Vergleichsbeispiele 2 und 3 haben zwar erheblich bessere Biegefestigkeiten und z.T. gute Metallisierung, aber infolge des Zusatzes von Glasfasern bzw. von Whiskers zeigen sie kein isotropes Verhalten in einer Reihe von Eigenschaften, z.B. der Reißfestigkeit.

**Patentansprüche**

1. Formmasse aus
   (A) 20 bis 80 Gew.-% mindestens eines Polyarylensulfids,
   (B) 1 bis 60 Gew.-% mindestens eines mineralischen Füllstoffes,
   (C) 1 bis 65 Gew.-% mindestens eines oberflächenmodifizierten mineralischen Füllstoffes und
   (D) 0,01 bis 0,4 Gew.-% mindestens eines gesättigten langkettigen Carbonsäureesters.

2. Formmasse nach Anspruch 1, dadurch gekennzeichnet, daß sie folgende Zusammensetzung hat:
   (A) 20 bis 80 Gew.-% Polyphenylensulfid
   (B) 10 bis 35 Gew.-% mindestens eines mineralischen Füllstoffes,
   (C) 10 bis 35 Gew.-% mindestens eines oberflächenmodifizierten mineralischen Füllstoffes,
   (D) 0,01 Gew.-% bis 0,2 Gew.-% mindestens eines gesättigten langkettigen Carbonsäureesters.

3. Formkörper, hergestellt aus der Formmasse gemäß Anspruch 1 oder 2.

4. Formkörper nach Anspruch 3, dadurch gekennzeichnet, daß dieser im Spritzgußverfahren oder durch Extrusion hergestellt wird.

5. Formkörper nach Anspruch 3 oder 4, dadurch gekennzeichnet, daß dieser unter vermindertem Druck mit Metall bedampft wird.

6. Formkörper nach Anspruch 5, dadurch gekennzeichnet, daß als Metall Aluminium verwendet wird.

7. Formkörper nach einem oder mehreren der Ansprüche 3 bis 6, dadurch gekennzeichnet, daß eine Plasmavorbehandlung vorgenommen wird.

8. Formkörper nach einem oder mehreren der Ansprüche 3 bis 7, dadurch gekennzeichnet, daß dieser eine isotrope Dimensionsstabilität bei gleichzeitig hoher Biegefestigkeit aufweist.

9. Formkörper nach einem oder mehreren der Ansprüche 3 bis 8 in Form von reflektierenden Gegenständen und elektronischen Funktionsteilen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | EP-A-0 459 229 (BAYER AG) | 1-4 | C08K5/10 |
| D,Y | * Ansprüche * | 5-9 | |
| | --- | | |
| X | EP-A-0 304 785 (BAYER AG) | 1-4 | |
| Y | * Ansprüche; Beispiel I * | 5-9 | |
| | --- | | |
| X | US-A-4 395 509 (J. P. BLACKWELL ET AL.) * Anspruch 1; Beispiel 3 * | 1-4 | |
| | --- | | |
| P,X | US-A-5 302 651 (K. KAWASHIMA ET AL.) * Spalte 4, Zeile 18 – Zeile 40; Beispiele * | 1-4 | |
| | --- | | |
| A | EP-A-0 236 835 (BAYER AG) * Seite 2, Zeile 38 – Seite 3, Zeile 46; Ansprüche * | 1-4 | |
| | ----- | | |

**RECHERCHIERTE SACHGEBIETE (Int.Cl.6)**

C08K

Der vorliegende Recherchenbericht wurde für alle Patentansprüche erstellt

| Recherchenort | Abschlußdatum der Recherche | Prüfer |
|---|---|---|
| BERLIN | 8. Februar 1995 | BOEKER, R |